# EUROPÄISCHE PATENTANMELDUNG

(11) **EP 1 092 974 A2**
(43) Veröffentlichungstag der Anmeldung: **18.04.2001**
(21) Anmeldenummer: 00120316.5
(22) Anmeldetag: 15.09.2000
(51) Int. Cl.: G01N 23/223

(54) **Detektor für grosse Waferflächen**

(30) Priorität: 07.10.1999 DE 19948382
(71) Anmelder: GEMETEC GESELLSCHAFT FUR MESSTECHNIK UND TECHNOLOGIE MBH, 81379 München (DE)
(72) Erfinder: Huber, Anton, 83607 Holzkirchen (DE)
(74) Vertreter: Laufhütte, Dieter, Dr.-Ing.

(57) **Zusammenfassung**

Die Erfindung betrifft eine Vorrichtung zur Totalreflexions-Röntgenfluoreszenzanalyse, welche eine schnellere und genauere Erfassung der Röntgenfluoreszenzspektren einer Probe erlaubt. Im Meßaufnehmer der Vorrichtung kommen DRIFT-Detektoren zum Einsatz, bei denen entstehende Ladungsträger durch eine mittels Ringelektroden erzeugte Radialkomponente des elektrischen Feldes in Richtung einer sehr klein ausgeführten Sammelanode beschleunigbar sind. Durch die niedrige Kapazität der Sammelanode ist eine schnellere und genauere Messung der im Detektorinneren erzeugten Ladungsträger möglich. Mittels eines Arrays, bestehend aus derartigen DRIFT-Detektoren, läßt sich die Röntgenfluoreszenz einer Probe ortsaufgelöst vermessen. Aus den erhaltenen Röntgenfluoreszenzspektren lassen sich die Oberflächenkonzentrationen der verschiedenen Fremdatome in der Probe ortsaufgelöst bestimmen.

## Beschreibung

Die Erfindung betrifft eine Vorrichtung zur Totalreflexions-Röntgenfluoreszenzanalyse (TRFA), bei der die glatte ebene Oberfläche einer Probe oder Dünnschicht auf einer Probe durch die einfallende Röntgenstrahlung angeregt wird und die emittierte Röntgenfluoreszenzstrahlung spektral erfaßt wird, welche eine Strahlungsquelle, einen Monochromator und einen Meßaufnehmer aufweist. Die Erfindung betrifft weiterhin die Verwendung einer derartigen Vorrichtung zur Bestimmung von Fremdatomkonzentrationen auf Waferoberflächen, sowie ein Verfahren zur ortsaufgelösten Messung von Fremdatomkonzentrationen auf einem Wafer.

Bei der Totalreflexions-Röntgenfluoreszenzanalyse wird die Oberfläche einer Probe unter einem sehr flachen Einfallswinkel mit der von einer Röntgenröhre erzeugten Röntgenstrahlung beaufschlagt. Der Einfallswinkel ist so gewählt, daß der einfallende Röntgenstrahl totalreflektiert wird. Wegen der Totalreflexions-Geometrie ist lediglich in einer oberflächennahen Schicht von ca. 3 nm Dicke eine gewisse Strahlungsintensität vorhanden. Daher werden lediglich die Atome dieses dünnen Oberflächenbereichs durch die einfallende Röntgenstrahlung angeregt. Die angeregten Atome emittieren Fluoreszenzröntgenquanten von bestimmter Energie, welche für das jeweilige Atom charakteristisch sind. Mittels eines Detektors wird das von allen Oberflächenatomen emittierte Energiespektrum vermessen, und aus der Intensität des zu einem Element gehörigen Peaks kann die Konzentration des jeweiligen Elements in der dünnen Oberflächenschicht bestimmt werden.

Zur Aufnahme des Energiespektrums werden bei den bisher verwendeten Vorrichtungen zur Röntgenfluoreszenzanalyse entweder Germanium- oder Siliziumdetektoren (Si(Li)) verwendet. Bei all diesen Detektoren wird ausgenützt, daß die einfallenden Röntgenquanten stark ionisierend wirken und daher im Halbleitermaterial eine Vielzahl von Ladungsträgern generieren. Je höherenergetisch das Röntgenquant ist, desto mehr Ladungsträger werden generiert. Zum Auslesen des Detektors wird daher in periodischen Abständen die im Detektor erzeugte Ladungsmenge gemessen und mittels eines Vielkanalanalysators in ein Energiespektrum umgewandelt. Mit derartigen Detektoren können Zählraten bis zu 2·10⁴ counts per second (cps) erzielt werden; es können also 2·10⁴ Röntgenquanten pro Sekunde vermessen werden.

Ein Nachteil derartiger Detektoren ist, daß sie nur dann gut aufgelöste Energiespektren liefern, wenn das thermische Rauschen durch Kühlung mit flüssigem Stickstoff wirksam unterdrückt wird. Die benötigten Stickstoff-Dewars sind groß und in der Handhabung umständlich.

In der deutschen Patentschrift DE 196 20 081 A1 sowie in der PCT-Anmeldung PCT/DE97/01015 ist ein Streifendetektor sowie ein Verfahren zur Herstellung eines Streifendetektors zum Nachweis ionisierender Teilchen und/oder Strahlung beschrieben. Als Streifen und Spannungszuführungsgebiete sind dabei wenigstens an einer Substratoberfläche des Siliziumsubstrats n-dotierte Bereiche sowie zwischen den n-dotierten Bereichen ein p-dotierter Isolationsbereich vorgesehen. Auf einer Substratoberfläche ist eine erste Isolatorschicht aufgebracht, und oberhalb der n-dotierten Bereiche sind Metallstreifen angeordnet.

Die Erfindung zeichnet sich dadurch aus, daß unmittelbar über der ersten Isolatorschicht wenigstens eine weitere Isolatorschicht vorgesehen ist, und daß wenigstens eine der Isolatorschichten in Projektion über dem Zwischenbereich zweier benachbarter n-dotierter Bereiche unterbrochen ist, und daß das p-dotierte Isolationsgebiet eine laterale p-Dotierstoffkonzentrationsverteilung aufweist, die im Bereich unterhalb der Unterbrechung der unterbrochenen Isolatorschicht eine höhere Dotierstoffkonzentration vorsieht als in dem unmittelbar an den n-dotierten Bereich angrenzenden Isolationsbereich. Die erfindungsgemäße Isolationsstruktur ist auch zur Isolation von Schutzringen geeignet, die die hohe Betriebsspannung zum Rand des Detektors hin allmählich abbauen. Sie isoliert um den gesamten Detektor verlaufende benachbarte Ringe gegeneinander, so daß sich auf ihnen unterschiedliche Potentiale bei geringen elektrischen Feldstärken ausbilden können.

Aufgabe der Erfindung ist es, eine Vorrichtung sowie ein Verfahren zur Röntgenfluoreszenzanalyse zur Verfügung zu stellen, um eine schnellere und besser aufgelöste Messung der Röntgenfluoreszenz einer Probe sowie eine Verringerung des zur Kühlung des Detektors nötigen Aufwands zu ermöglichen.

Diese Aufgabe wird erfindungsgemäß durch eine Vorrichtung zur Totalreflexions-Röntgenfluoreszenzanalyse gelöst, bei der die glatte ebene Oberfläche einer Probe oder Dünnschicht auf einer Probe durch die einfallende Röntgenstrahlung angeregt wird und die emittierte Röntgenfluoreszenzstrahlung spektral erfaßt wird, welche eine Strahlungsquelle, einen Monochromator und einen Meßaufnehmer aufweist, wobei der Meßaufnehmer mindestens einen DRIFT-Detektor umfaßt, wobei in jedem DRIFT-Detektor mittels einer Elektrodenanordnung von auf verschiedenen Spannungsniveaus befindlichen Elektroden ein elektrisches Feld erzeugbar ist, das eine Radialkomponente aufweist. Entstehende Ladungsträger werden durch diese Radialkomponente des elektrischen Feldes auf eine niederkapazitive Sammelelektrode zu beschleunigt.

Durch Verwendung eines Meßaufnehmers mit mindestens einem DRIFT-Detektor können Zählraten bis zu 10⁵ cps erzielt werden. Dies wird dadurch ermöglicht, daß die von einem Röntgenquant erzeugten Ladungsträger durch das im Detektorinneren herrschende elektrische Feld schneller zur Sammelelektrode geführt werden. Hauptursache für die hohe Zählrate, die mit Hilfe von DRIFT-Detektoren erzielt werden kann, ist jedoch die niedrige Kapazität der Sammelelektrode. Die radiale Komponente des elektrischen Feldes beschleunigt die Ladungsträger zu der Sammelelektrode hin, und deshalb kann die Sammelelektrode kleinflächig und deshalb niederkapazitiv ausgestaltet sein.

Zusammenfassend ist festzustellen, daß bei der Verwendung von DRIFT-Detektoren die Auslesezeiten signifikant verkürzt werden können. Dadurch können höhere Zählraten verarbeitet werden, und man erhalt Spektren mit besserer Energieauflösung. DRIFT-Detektoren erfordern auch weniger Aufwand zur Kühlung; insbesondere kann die aufwendige Stickstoff-Kühlung entfallen.

Es ist von Vorteil, wenn die Elektrodenanordnung mehrere auf verschiedenen Spannungsniveaus befindliche, konzentrisch angeordnete Ringelektroden umfaßt. Bei einer derartigen Elektrodenanordung ergibt sich ein elektrisches Feld mit einer Radialkomponente.

Gemäß einer weiteren vorteilhaften Ausführungform der Erfindung ist ein erster Transistor einer Pulsverstärkungsstufe in die Sammelelektrode integriert. Dies kann dadurch geschehen, daß die Schichtstrukturen eines Feldeffekttransistors in der Mitte des DRIFT-Detektors integriert wird, wobei das Gate des Feldeffekttransistors mit der Sammelelektrode elektrisch verbunden ist. Dadurch kann die Verbindung zwischen der Sammelelektrode und dem Gate des FET verkürzt werden, und die parasitäre Kapazität der Verbindungsleitung wird stark reduziert. Desweiteren kommt es zur einer Verminderung des durch induktive Kopplung eingefangenen Rauschens.

Gemäß einer weiteren Ausgestaltung der Erfindung ist der DRIFT-Detektor mittels eines Peltier-Kühlelements kühlbar. Mit einstufigem Peltier-Kühlern läßt sich eine Kühlung von bis zu 30° relativ zur Umgebungstemperatur erzielen. Eine derartige Kühlung ist ausreichnend, um mit DRIFT-Detektoren gut aufgelöste Energiespektren aufnehmen zu können. Deshalb kann die für frühere Detektoren erforderliche Stickstoff-Kühlung durch eine Peltier-Kühlung ersetzt werden, wobei das Peltierelement direkt in den DRIFT-Detektor integriert wird.

Es ist von Vorteil, die Strahlungsquelle, den Monochromator und den Meßaufnehmer in einem Vakuumgehäuse anzuordnen. Desweiteren ist es von Vorteil, wenn der Meßaufnehmer als Meßfenster ein dünnes Fenster mit einer Dicke von kleiner als 2 µm aufweist. Außerdem ist es von Vorteil, wenn die Strahlungsquelle aus einer niederenergetischen Röntgenröhre besteht.

Durch die drei genannten Maßnahmen kann der Meßbereich der Totalreflexions-Röntgenfluoreszenzanalyse auf Elemente mit niedriger Ordnungszahl Z, also auf leichte Elemente, ausgedehnt werden. Diese Elemente emittieren Fluoreszenzröntgenstrahlung von nur geringer Energie. Mit Hilfe des Vakuumgehäuses sowie des dünnen Meßfensters lassen sich die unerwünschten Absorptionen der Röntgenstrahlung verringern. Eine niederenergetische Röntgenröhre emittiert eine Anregungsstrahlung, die nahe an der Energie der Fluoreszenzröntgenstrahlung leichter Elemente liegt. Dadurch kann die Fluoreszenzausbeute gesteigert werden.

Es ist von Vorteil, zur Aufnahme einer Probe einen Probentisch gegenüber dem Meßaufnehmer anzuordnen, wobei der Probentisch vorzugsweise in z-Richtung und in x,y-Richtung längsverschieblich, um seine Mittelachse drehbar und in einer Kreissegmentführung schwenkbar ausgeführt ist.

Bei der Totalreflexions-Röntgenfluoreszenzanalyse muß der Einfallswinkel auf 0,1 bis 0,2 Bogenminuten genau eingestellt werden. Dies gelingt mit einem justierbaren Präzisionsprobentisch.

Weiterhin ist es von Vorteil, wenn der Probentisch als Aufnahmeplatte eine Saugplatte aufweist, in welcher mehrere über ihre obere Ebene ausfahrbare Stifte integriert sind. Mit Hilfe der Saugplatte läßt sich die Probe, beispielsweise ein Wafer, in Richtung des Probentischs ansaugen. Dadurch wird eine präzisere Führung und eine genauere Positionierbarkeit der Probe erzielt. Um die Probe bzw. den Wafer wieder von der Platte zu lösen, werden dazu vorgesehene Stifte ausgefahren. Die Probe bzw. der Wafer kann dann beispielsweise von einem Robotergreifer entnommen werden.

Gemäß einer weiteren vorteilhaften Ausführungsform ist dem Meßaufnehmer eine Streustrahlenblende vorgeschaltet. Eine derartige Streustrahlenblende verhindert den Einfall von Streuröntgenstrahlung in den Meßaufnehmer, indem die Streustrahlung von der Blende absorbiert wird.

Dabei ist es von Vorteil, wenn die Streustrahlenblende in z-Richtung verfahrbar ist, denn dadurch kann eine Anpassung der Lage der Streustrahlenblende an die Dicke der jeweils vermessenen Probe vorgenommen werden.

Gemäß einer weiteren vorteilhaften Ausgestaltung der Erfindung geschieht die Anregung der Probe mittels eines einfallenden parallelen Röntgenstrahls, welcher mit Hilfe von parabelförmig angeordneten Bragg-Reflektoren erzeugt wird, die die von einer Röntgenröhre abgegebene Röntgenstrahlung reflektieren. Genau wie bei einem Parabolspiegel ist es mit dieser Anordnung von Bragg-Reflektoren möglich, aus der divergenten, von der Röntgenröhre erzeugten Strahlung einen parallelen Röntgenstrahl zu formen. Dadurch, daß die in verschiedene Richtungen emittierten Röntgenstrahlen zu einem Strahl gebündelt werden können, kann eine Anregungsstrahl von hoher Intensität zur Verfügung gestellt werden. Als Bragg-Reflektoren können dabei entweder Kristalle oder Multischichtsysteme Verwendung finden.

Gemäß einer weiteren vorteilhaften Ausführungsform der Erfindung weist der Meßaufnehmer eine Detektoranordnung aus mehreren DRIFT-Detektoren auf, welche eine ortsaufgelöste Aufzeichnung der Röntgenfluoreszenzstrahlung der Probe ermöglicht. Mittels eines derartigen Arrays von DRIFT-Detektoren läßt sich eine Aussage über die Verteilung der verschiedenen Elemente auf der Probenoberfläche machen. Dazu darf jeder der DRIFT-Detektoren nur die Fluoreszenzstrahlung aus einem definierten kleinen Bereich der Probe erfassen. Mit Hilfe von DRIFT-Detektoren läßt sich die geringe Fluoreszenzintensität besser ausnutzen als mit konventionellen Detektoren, und man erhält trotz der geringen Fluoreszenzintensität gute Energiespektren. Erst dadurch ist es möglich, zu einer ortsaufgelösten Aufzeichnung zu gelangen.

Dazu ist es aber notwendig, für jeden DRIFT-Detektor eine eigene Pulsverstärkerkette vorzusehen. Es ist zu erwarten, daß in Kürze integrierte Schaltkreise angeboten werden, in denen die benötigte Pulsverstärkungselektronik integriert ist.

Bei Verwendung eines Arrays aus DRIFT-Detektoren ist es von Vorteil, wenn die Detektoranordnung in einm ersten und in einem zweiten Modus betreibbar ist, wobei im ersten Modus die Röntgenfluoreszenzstrahlung der Probe ortsaufgeläst gemessen wird, und wobei im zweiten Modus das Summenspektrum der von den einzelnen Detektoren gelieferten Röntgenfluoreszenzspektren bestimmt wird.

Während die ortsaufgelöste Messung eine Aussage über die Verteilung der Elemente auf der vermessenen Oberfläche erlaubt, ermöglicht das Summenspektrum eine niedrigere Auflösungsgrenze, weil bei der Berechnung des Summenspektrums eine wesentlich höhere Zahl von Fluoreszenzröntgenquanten berücksichtigt wurde. Die Auswertung des Summenspektrums erlaubt eine Aussage über die mittleren Konzentrationen von Fremdatomen auf der Proben- bzw. Waferoberfläche.

Gemäß einer weiteren vorteilhaften Ausgestaltung der Erfindung sind die Probe und der Meßaufnehmer relativ zueinander in x,y-Richtung bewegbar. Dabei umfaßt der Meßaufnehmer eine Detektoranordnung aus mehreren DRIFT-Detektoren. Auf diese Weise ist es möglich, mit einer nur einen Teil der Waferoberfläche abdeckenden Detektoranordnung die Fremdatomkonzentrationen einer großflächigen Probe, insbesondere eines Wafers, zu erfassen. Dabei kann zum einen der Detektor über die fixierte Probe bewegt werden, zum anderen kann eine stationäre Detektoranordnung vorgesehen sein, unter der die Probe bewegt wird. Eine dritte Möglichkeit ist, sowohl den Detektor als auch die Probe zu bewegen.

Hinsichtlich einer ortsaufgelösten Aufzeichnung der Röntgenfluoreszenzstrahlung ist es insbesondere bei der Vermessung kreisförmiger Proben von Vorteil, die Detektoranordnung in Form von mindestens einem Kreissektor auszubilden, wobei die Detektoranordnung und die Probe bezüglich einer durch die Sektorspitze verlaufenden Achse relativ zueinander drehbar gelagert sind. Die aus mehreren DRIFT-Detektoren bestehende Detektoranordnung deckt daher jeweils mindestens einen Sektor der zu vermessenden kreisförmigen Probe bzw. des Wafers ab, und hinsichtlich dieses Teils der Probe erfolgt dann eine ortsaufgelöste Erfassung der Fluoreszenzspektren. Anschließend wird die Probe bzw. der Wafer relativ zum Detektor um ein 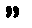 Tortenstück" weitergedreht, um dort die jeweiligen Fluoreszenzspektren aufzuzeichnen.

Bei Verwendung einer aus zwei sich diametral gegenüberliegenden Kreissektoren bestehenden Detektoranordnung ergibt sich der zusätzliche Vorteil einer kürzeren Meßzeit.

Gemäß einer weiteren vorteilhaften Ausführungsform deckt die Detektoranordnung eine Fläche ab, welche größer ist als die Fläche der Probe. Auf diese Weise kann die ortsaufgelöste Aufzeichnung der Röntgenfluoreszenz einer Probe mit minimaler Meßzeit erfolgen.

Die erfindungsgemäße Vorrichtung zur Totalreflexions-Röntgenfluoreszenzanalyse kann insbesondere zur Bestimmung von Fremdatomkonzentrationen auf Waferoberflächen verwendet werden. Die für die Halbleiterfertigung verwendeten Silizium-Wafer unterliegen höchsten Anforderungen an die Reinheit des verwendeten Siliziums. Hinsichtlich von Fremdatomkonzentrationen gibt es eng begrenzte Toleranzbereiche, die überwacht werden müssen. Dazu bietet sich die Totalreflexions-Röntgenfluoreszenzanalyse insofern an, als aus den aufgenommenen Fluoreszenzspektren mittels einer geeigneten Eichung sofort auf die Fremdatomkonzentrationen rückgeschlossen werden kann. Durch die erfindungsgemäße Verwendung von DRIFT-Detektoren kann die Meßgenauigkeit weiter erhöht werden, wodurch auch sehr geringe Fremdatomkonzentrationen quantitativ erfaßbar sind. Eine ortsaufgelöste Bestimmung der Fremdatomkonzentrationen auf der Waferoberfläche erlaubt eine Aussage über die Verteilung verschiedener Elemente auf der Waferoberfläche und ist daher hilfreich, um die Ursache von Kontaminationen ausfindig machen zu können. Wichtig ist, daß die erfindungsgemäße Vorrichtung zur Totalreflexions-Röntgenfluoreszenzanalyse auf einfache Weise in eine Halbleiter-Fertigungslinie integriert werden kann und daher eine ständige Qualitätsüberwachung gestattet.

Bei dem erfindungsgemäßen Verfahren zur ortsaufgelösten Messung von Fremdatomkonzentrationen auf einem Wafer unter Verwendung einer mehrere Detektoren umfassenden Detektoranordnung werden folgende Schritte ausgeführt: Zunächst wird eine Relativbewegung zwischen der Detektoranordnung und der zu vermessenden Probe erzeugt, wobei die jeweiligen lokalen Röntgenfluoreszenzspektren aufgenommen werden. Anschließend wird die jeweilige lokale Fremdatomkonzentration aus den jeweiligen dort aufgezeichneten Röntgenfluoreszenzspektren berechnet.

Auf diese Weise kann die gesamte Waferoberfläche auf ihren Gehalt an Fremdatomen überprüft werden, wobei die Detektoranordnung nicht die gesamte Waferfläche abdecken muß. Die Konzentrationen der Fremdatome an einer bestimmten Stelle ergeben sich dabei aus der Größe des Peaks im dort aufgenommenen Spektrum. Mit der beschriebenen Meßmethode kann daher simultan eine ortsaufgelöste Darstellung der Konzentrationen sämtlicher Fremdatome erhalten werden. Das erfindungsgemäße Verfahren zur Messung der mittleren Fremdatomkonzentrationen auf einem Wafer unter Verwendung einer mehrere Detektoren umfassenden Detektoranordnung umfaßt folgende Schritte: Zunächst wird eine Relativbewegung zwischen der Detektoranordnung und der zu vermessenden Probe erzeugt und die jeweiligen lokalen Röntgenfluoreszenzspektren aufgenommen. Anschließend werden die lokalen Röntgenfluoreszenzspektren summiert. Aus dem so erhaltenen Summenspektrum können dann die mittleren Fremdatomkonzentrationen bestimmt werden.

Die Konzentrationen der Fremdatome ergeben sich aus den Peaks im Summenspektrum. Mit der beschriebenen Meßmethode können die über die Waferoberfläche gemittelten Fremdatomkonzentrationen in kurzer Zeit mit hoher Empfindlichkeit bestimmt werden.

Weitere Einzelheiten und Vorteile der Erfindung werden nachfolgend anhand mehrerer in den Zeichnungen dargestellter Ausführungsbeispiele erläutert. Es zeigen:
- Figur 1: eine Gesamtdarstellung einer Vorrichtung zur Totalreflexions-Röntgenfluoreszenzanalyse;
- Figur 2: die Anordnung des Meßaufnehmers und des DRIFT-Detektors im Detektorrohr;
- Figur 3: ein im Bereich niedriger Ordnungszahlen Z aufgenommenes Röntgenfluoreszenzspektrum;
- Figur 4: eine schematische Darstellung eines DRIFT-Detektors sowie des elektrischen Feldverlaufs im DRIFT-Detektor;
- Figur 5: das Layout eines Arrays von DRIFT-Detektoren;
- Figur 6: eine Vorrichtung zur Erzeugung eines parallelen Röntgenstrahls mit Hilfe von parabelförmig angeordneten Bragg-Reflektoren;
- Figur 7: ein speziell für die Waferanalytik geeignetes Ausführungsbeispiel eines Arrays von DRIFT-Detektoren, wobei das kreissektorförmige Detektor-Array über den gesamten Wafer rotiert werden kann.

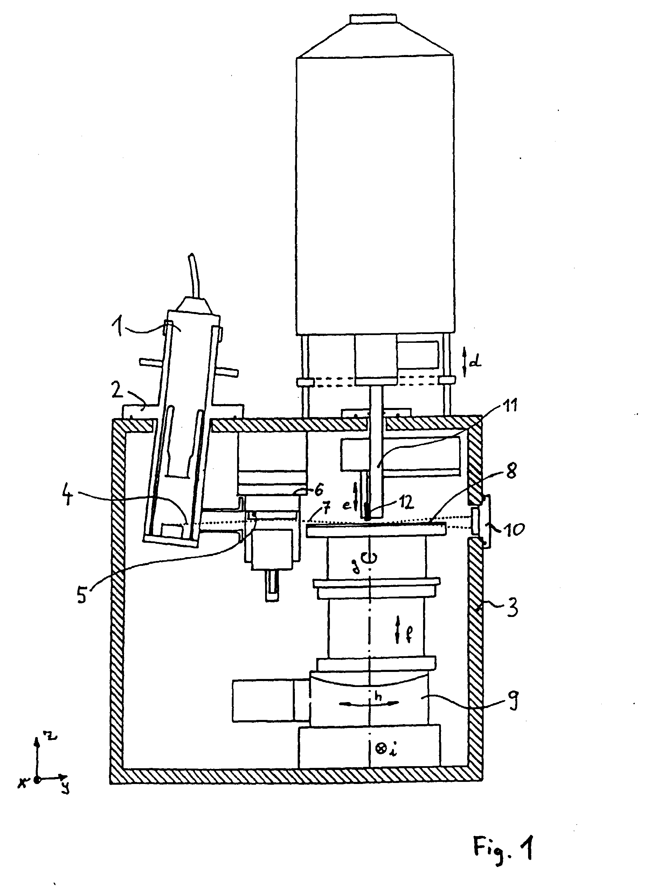

In Figur 1 ist eine speziell für die Totalreflexions-Röntgenfluoreszenzanalyse geeignete Vorrichtung gezeigt, welche im wesentlichen eine Röntgenstrahlungsquelle, einen Monochromator und einen Meßaufnehmer zur Erfassung der von der Probe emittierten Röntgenfluoreszenzstrahlung umfaßt. Die Röntgenröhre 1 ist dabei mittels der Halterung 2 im Gehäuse 3 so fixiert, daß der Abgriff der erzeugten Röntgenstrahlung 4 unter einem geeigneten Winkel erfolgen kann. Als Anodenmaterial der Röntgenröhre kommen Chrom, Molybdän, Silber, Wolfram, etc. in Betracht. Die erzeugte Röntgenstrahlung wird einem Monochromator 5 zugeführt, der mittels der Halterung 6 relativ zum Strahlengang justiert werden kann.

Als Monochromator wird ein Bragg-Reflektor verwendet, der entweder ein periodisches Multischichtsystem oder ein Kristall sein kann. Bragg-Reflektoren, welche als Multischichtstruktur ausgeführt sind, weisen abwechselnd Schichten einer schweren Komponente A (Molybdän, Nickel, Wolfram, etc.) und Schichten einer leichten Komponente B (Kohle, Borkarbid, Magnesium, etc.) auf. Mittels des Bragg-Reflektors 5 wird aus der energetisch breitbandigen Röntgenstrahlung der Röntgenröhre eine bestimmte Anregungsenergie selektiert.

Der durch den Bragg-Reflektor 5 monochromatisierte Röntgenstrahl 7 wird zur Fluoreszenzanregung der Probe 8 verwendet. Dazu muß der Röntgenstrahl 7 die Probe 8 unter einem sehr flachen, präzise einzustellenden Einfallswinkel beaufschlagen. Die geforderte Genauigkeit für die Einstellung des Einfallswinkels der Primärröntgenstrahlung beträgt etwa 0,1 bis 0,2 Bogenminuten. Eine derartige Genauigkeit kann durch Verwendung eines Probentischs 9 erzielt werden, welcher in x-Richtung (Pfeil i) sowie in z-Richtung (Pfeil f) längsverschieblich ist. Des weiteren ist der Probentisch 9 um seine Mittelachse drehbar (Pfeil g) und in einer Kreissegmentführung schwenkbar (Pfeil h) ausgeführt.

Damit die aufliegende Probe 8 mit der Präzision des Probentischs 9 bewegt werden kann, ist eine gute Verbindung zwischen Probentisch und Probe notwendig. Diese Verbindung kann beispielsweise mit Hilfe einer Saugplatte oder elektrostatisch mittels eines entsprechenden Probentisches erfolgen. In die Saugplatte bzw. den Probentisch können mehrere über die obere Ebene ausfahrbare Stifte integriert sein. Hierdurch kann einerseits die zu untersuchende Probe, beispielsweise ein Wafer, sicher aufgenommen werden. Nach der Messung kann die Probe durch Ausfahren der Stifte angehoben werden und beispielsweise durch einen Robotergreifer erfaßt und seitlich durch eine entsprechende Öffnung des Gehäuses herausgezogen werden.

Zur Einstellung des richtigen Einfallswinkels kann in der Gehäusewandung ein Reflexionsdetektor 10 vorgesehen sein, mit dem der Winkel der von der Probe totalreflektierten Röntgenstrahlung bestimmbar ist.

Die Atome in der Oberflächenschicht der Probe emittieren nach der Anregung durch den einfallenden Röntgenstrahl 7 ihre charakteristische Fluoreszenzröntgenstrahlung in allen Richtungen. Zur Aufzeichnung des Energiespektrums der Fluoreszenzröntgenstrahlung ist gegenüber des Probentischs ein Detektorrohr 11 angeordnet, in dem der eigentliche Meßaufnehmer aufgenommen ist. Bei der erfindungsgemäßen Lösung umfaßt der (in Figur 1 durch das Detektorrohr verdeckte) Meßaufnehmer mindestens einen DRIFT-Detektor. Das Detektorrohr 11 ist nach unten, also zur Probe 8 hin, geöffnet, so daß die emittierte Fluoreszenzstrahlung ungehindert einfallen kann. In z-Richtung kann das Detektorrohr 11 zusammen mit dem darin enthaltenen Meßaufnehmer verschoben werden (Pfeil d), um die Meßgeometrie an verschiedene Probendicken anpassen zu können.

Bei Aufnahme der Energiespektren soll verhindert werden, daß Streustrahlung zum Detektor gelangt. Zu diesem Zweck ist eine Streustrahlenblende 12 vorgesehen, welche ebenfalls in z-Richtung verfahrbar ist.

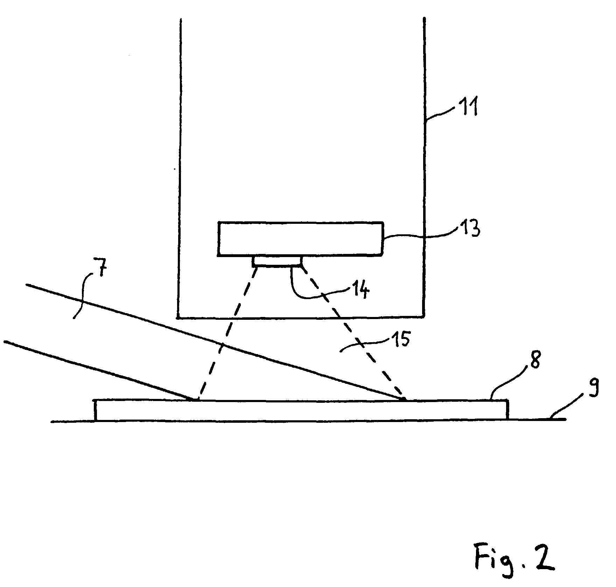

In Figur 2 ist die Anordnung des Meßaufnehmers 13 in dem Detektorrohr 11 dargestellt. Der Meßaufnehmer 13 umfaßt mindestens einen DRIFT-Detektor 14, mit dem das Energiespektrum der von der Probe 8 emittierten Fluoreszenzröntgenstrahlung 15 aufgenommen werden kann. Die auf dem Probentisch 9 aufliegende Probe 8 wird von dem Anregungsröntgenstrahl 7 beaufschlagt. Die Oberflächenatome der Probe 8 emittieren Fluoreszenzstrahlung in allen Richtungen, wobei lediglich die in den Kegel 15 emittierten Röntgenquanten vom Detektor 14 erfaßt werden.

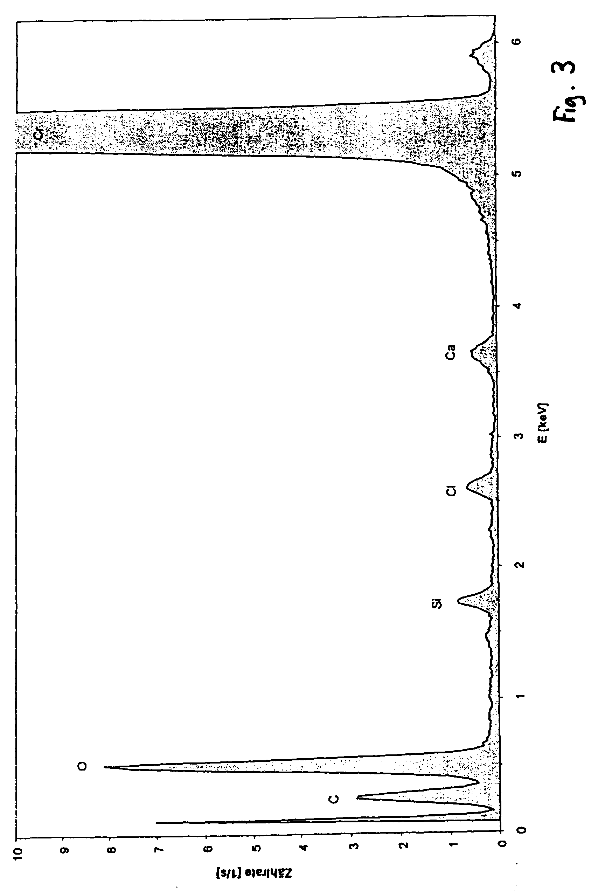

In Figur 3 ist ein typisches Fluoreszenzröntgenspektrum für den Bereich der leichteren Elemente, also der Elemente mit niedriger Ordnungszahl Z, gezeigt. Aufgetragen ist die Zählrate (in cps) als Funktion der in Kiloelektronenvolt (keV) gemessenen Energie der Fluoreszenzröntgenquanten. Jedes in der Oberflächenschicht der Probe enthaltene Element (hier beispielsweise C, O, Si, Cl, etc.) emittiert dabei Fluoreszenzstrahlung von einer charakteristischen Energie, so daß das Vorhandensein eines bestimmten Elements aus dem Peak im Fluoreszenzspektrum gefolgert werden kann. Bei geeigneter Eichung kann aus der Größe des Peaks (durch Berechnung des Integrals über den Peak bei Subtraktion der Basislinie) eine Aussage über die Konzentration des jeweiligen Elements in der Oberflächenschicht getroffen werden.

Es ist dabei insbesondere schwierig, Konzentrationen von leichten Elementen nachzuweisen, da deren Fluoreszenzstrahlung nur eine geringe Energie besitzt. Um die Auflösung in diesem Elementenbereich zu verbessern, kann zum einen eine niederenergetische Röntgenröhre 1 verwendet werden, welche ein Anodenmaterial mit niedriger Ordnungszahl Z aufweist. Als Materialien für die Anode kommen dabei Chrom, Molybdän, Silber und Wolfram in Betracht. Eine zweite Maßnahme ist, die Röntgenröhre, den Monochromator, den Probentisch und den Meßaufnehmer in einem Vakuumgehäuse anzuordnen. Dadurch wird die Absorbtion der Röntgenstrahlung durch Luft vermieden. Bei der in Figur 1 gezeigten Anordnung ist es daher von Vorteil, das Gehäuse 3 als Vakuumgehäuse auszugestalten und zu evakuieren. Eine dritte Maßnahme ist, die Absorbtion durch das entweder im Meßaufnehmer oder in jedem einzelnen DRIFT-Detektor vorgesehene Meßfenster zu reduzieren. Es ist von Vorteil, anstelle des üblichen Berylliumfensters ein Fenster mit einer Dicke von weniger als 2 µm vorzusehen. Durch die genannten drei Maßnahmen ist es möglich, auch die Konzentrationen von leichten Elementen zuverlässig zu bestimmen.

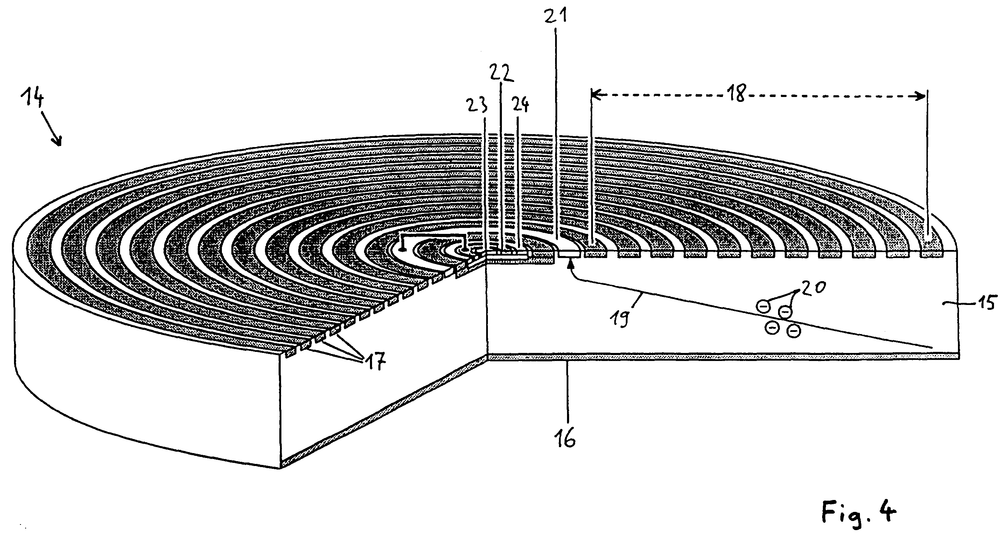

In Figur 4 ist der verwendete DRIFT-Detektor 14 schematisch dargestellt. Der Detektor 14 besteht aus einer Scheibe aus n-dotiertem Silizium, auf deren einer Seite eine Kathode 16 aus p-dotiertem Silizium aufgebracht ist. Auf der gegenüberliegenden Seite der Scheibe sind konzentrische Ringelektroden 17 aufgebracht, welche ebenfalls aus p-dotiertem Silizium bestehen. Während die Kathode 16 auf einem bestimmten Potential gehalten wird, befinden sich die verschiedenen Ringelektroden 17 auf verschiedenen Spannungsniveaus. Beispielsweise besteht zwischen den beiden in Figur 4 gesondert gekennzeichneten Ringelektroden eine Spannungsdifferenz 18.

Durch den in Radialrichtung der Scheibe bestehenden Spannungsgradienten 19 zwischen den beiden Seiten des Detektors 14 entsteht im Detektorinneren 15 ein elektrisches Feld mit einer radial verlaufenden Komponente. Wenn durch ein einfallendes Röntgenquant Ladungsträger 20, also Elektronen und Löcher, erzeugt werden, so werden die entstandenen Elektronen durch die Radialkomponente des elektrischen Feldes in Richtung der Ringanode 21 beschleunigt.

Zwischen der Kathode 16 und der Ringanode 21 kann ein zur Zahl der generierten Ladungsträger proportionaler Stromstoß gemessen werden. Hauptvorteil des beschriebenen DRIFT-Detektors ist, daß die durch Anode und Kathode gebildete Kapazität sehr viel kleiner als bei früheren Detektorbauformen ausfällt, weil die von der Ringelektrode 21 bedeckte Fläche wesentlich kleiner ausgeführt werden kann als der Detektor selbst. Dadurch kann die entstehende Ladung zum einen sehr schnell und zum anderen sehr genau bestimmt werden.

Das zwischen Anode und Kathode anliegende Signal wird nach entsprechender Pulsverstärkung einem Vielkanalzähler zugeführt, welcher dann das gewünschte Energiespektrum liefert. Es ist von Vorteil, den ersten Transistor der Verstärkerstufe direkt auf der Detektoroberseite zu integrieren, um die sensitive Verbindung zwischen der Ringanode 21 und dem Gate-Eingang des ersten Feldeffekttransistors der Verstärkerschaltung möglichst kurz ausführen zu können. Dies ist in Figur 4 gezeigt. Die Ringelektrode 21 ist mit dem Gate 22 eines in den Detektor integrierten FET verbunden. Das am Gate 22 anlegende Potential vermag die Source-Drain-Strecke (23, 24) zu schalten. Das Signal-Rausch-Verhältnis kann durch diese Maßnahme nachhaltig verbessert werden.

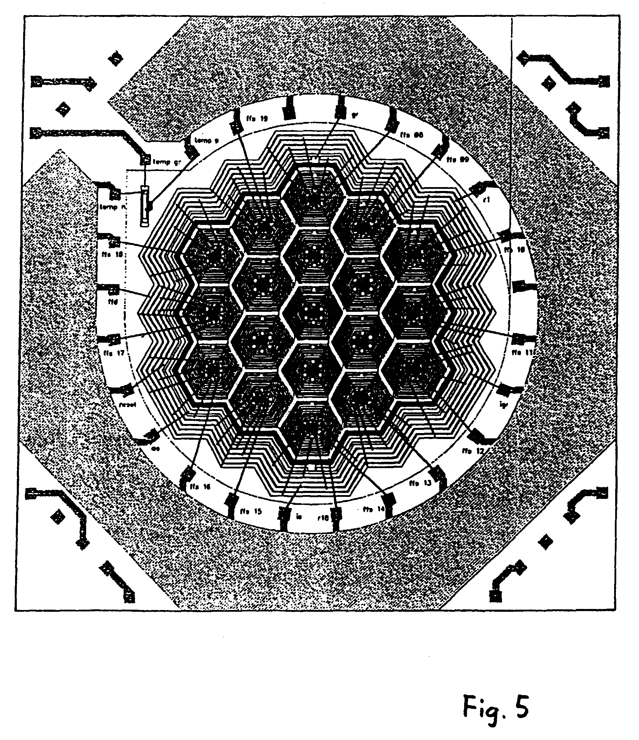

In Figur 5 ist ein Array von DRIFT-Detektoren dargestellt, wobei jeder einzelne Detektor die in Figur 4 gezeigte Struktur aufweist. Allerdings sind die Ringelektroden nicht kreisförmig, sondern hexagonal ausgeführt, wodurch sich eine charakteristische Wabenstruktur ergibt. Mit Hilfe eines derartigen Arrays von DRIFT-Detektoren läßt sich eine ortsaufgelöste Messung der Röntgenfluoreszenz der Probe durchführen. Aus den aufgenommenen Energiespektren kann die lokale Konzentration von verschiedenen Elementen in der Probenoberfläche bestimmt werden. Dadurch ist es möglich, die Verteilung eines bestimmten Elements auf der vermessenen Oberfläche graphisch darzustellen. Insbesondere bei der Vermessung von Fremdatomkonzentrationen von Wafern ist es von Interesse, an welcher Stelle der Waferoberfläche Kontaminationen vorliegen, weil dadurch die Diagnose der Ursache für die Kontaminationen erleichtert wird.

Es ist zu erwarten, daß in absehbarer Zeit Pulsverstärkungs- und Auswerteelektronik als integrierte Schaltungen vorliegen, so daß eine Analyse der von den vielen DRIFT-Detektoren des Arrays erzeugten Daten mit vertretbarem Aufwand möglich sein wird.

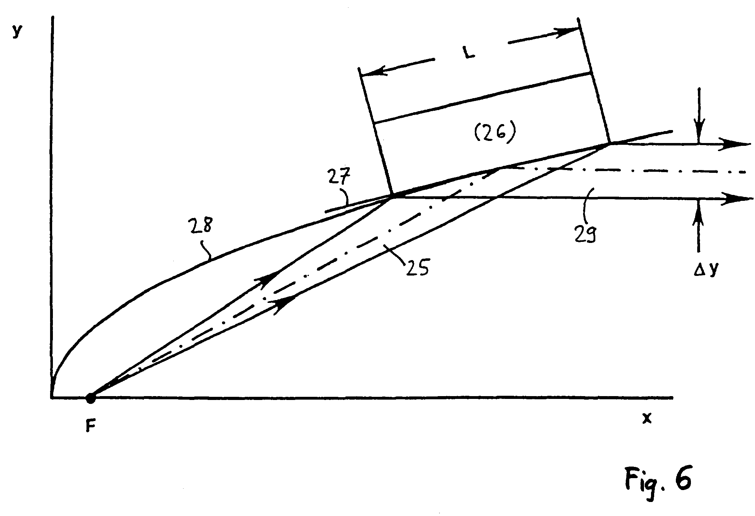

Die Verwendung eines großflächigen Detektorarrays erfordert einen Anregungsröntgenstrahl mit großem Durchmesser, der unter geringem Einfallswinkel auf der Probe auftrifft. In Figur 6 ist eine Möglichkeit zur Erzeugung eines derartigen Röntgenstrahls gezeigt. Der von einer Röntgenröhre emittierte divergente Röntgenstrahl 25 beaufschlagt dabei einen Bragg-Reflektor 26, dessen Oberfläche tangential (27) zu einer Parabelbahn 28 angeordnet ist. Wie bei einem Parabolscheinwerfer erzeugt der Bragg-Reflektor 26, der entweder als Multischichtstruktur oder als Kristall ausgebildet sein kann, einen parallelen Strahl 29 mit Durchmesser y, der zur Anregung der Probe verwendet werden kann.

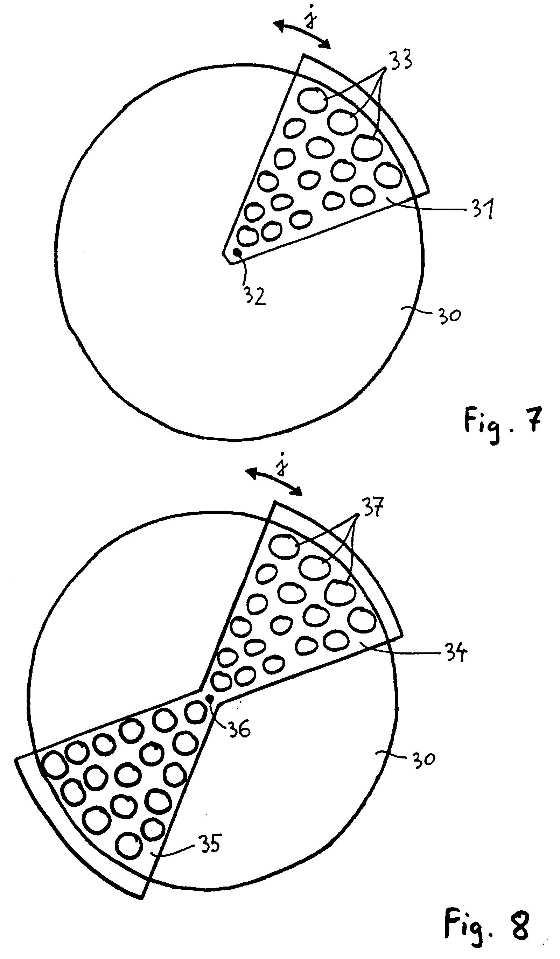

In Figur 7 ist eine besonders günstige geometrische Anordnung zur ortsaufgelösten Messung der Fremdatomkonzentrationen auf einer Waferoberfläche gezeigt. Dazu ist ein kreissektorförmiges Array 31 von DRIFT-Detektoren 33 vorgesehen. Zur Aufzeichnung der ortsaufgelösten Fluoreszenz wird die Waferoberfläche im durch das Array 31 abgedeckten Flächenbereich durch einen parallel einfallenden Röntgenstrahl angeregt. Das Fluoreszenzspektrum kann dann durch die DRIFT-Detektoren 33 aufgezeichnet werden. Nach der Aufzeichnung des Fluoreszenzspektrums in dem abgedeckten Sektor wird der Wafer 30 relativ zu dem Array 31 um den Mittelpunkt 32 weitergedreht.

Die in Figur 8 dargestellte Detektoranordnung besteht aus zwei fest miteinander verbundenen, kreissektorförmigen Arrays 34 und 35 von DRIFT-Detektoren 37. Die beiden Kreissektoren sind einander diametral gegenüberliegend angeordnet und können relativ zu dem zu vermessenden Wafer 30 um die Drehachse 36 gedreht werden (Pfeil j), wobei entweder der Wafer oder die Detektoranordnung bewegt wird. Zur Aufzeichnung der ortsaufgelösten Fluoreszenz wird die Waferoberfläche in dem Bereich, der durch die Arrays 34 und 35 abgedeckt wird, durch einen parallel einfallenden Röntgenstrahl angeregt; anschließend wird das Fluoreszenzspektrum durch die DRIFT-Detektoren 37 aufgezeichnet. Nach Aufzeichnung des Fluoreszenzspektrums wird die Detektoranordnung um einen bestimmten Winkel weitergedreht.

## Patentansprüche

1. Vorrichtung zur Totalreflexions-Röntgenfluoreszenzanalyse (TRFA), bei der die glatte ebene Oberfläche einer Probe oder Dünnschicht auf einer Probe durch die einfallende Röntgenstrahlung angeregt wird und die emittierte Röntgenfluoreszenzstrahlung spektral erfaßt wird, welche eine Strahlungsquelle, einen Monochromator und einen Meßaufnehmer aufweist, dadurch gekennzeichnet, daß der Meßaufnehmer mindestens einen DRIFT-Detektor umfaßt, wobei in jedem DRIFT-Detektor mittels einer Elektrodenanordnung von auf verschiedenen Spannungsniveaus befindlichen Elektroden ein elektrisches Feld erzeugbar ist, das eine Radialkomponente aufweist, wobei entstehende Ladungsträger durch die Radialkomponente des elektrischen Feldes auf eine niederkapazitive Sammelelektrode zu beschleunigbar sind.

2. Vorrichtung zur Totalreflexions-Röntgenfluoreszenzanalyse nach Anspruch 1, dadurch gekennzeichnet, daß die Elektrodenanordnung mehrere auf verschiedenen Spannungsniveaus befindliche, konzentrisch angeordnete Ringelektroden umfaßt.

3. Vorrichtung zur Totalreflexions-Röntgenfluoreszenzanalyse nach einem der Ansprüche 1 oder 2, dadurch gekennzeichnet, daß ein erster Transistor einer Pulsverstärkungsstufe in die Sammelelektrode integriert ist.

4. Vorrichtung zur Totalreflexions-Röntgenfluoreszenzanalyse nach einem der Ansprüche 1 bis 3, dadurch gekennzeichnet, daß der DRIFT-Detektor mittels eines Peltier-Kühlelements kühlbar ist.

5. Vorrichtung zur Totalreflexions-Röntgenfluoreszenzanalyse nach einem der Ansprüche 1 bis 4, dadurch gekennzeichnet, daß die Strahlungsquelle, der Monochromator und der Meßaufnehmer in einem Vakuumgehause angeordnet sind.

6. Vorrichtung zur Totalreflexions-Röntgenfluoreszenzanalyse nach einem der Ansprüche 1 bis 5, dadurch gekennzeichnet, daß der Meßaufnehmer als Meßfenster ein dünnes Fenster mit einer Dicke von kleiner als 2 µm aufweist.

7. Vorrichtung zur Totalreflexions-Röntgenfluoreszenzanalyse nach einem der Ansprüche 1 bis 6, dadurch gekennzeichnet, daß die Strahlungsquelle eine niederenergetische Röntgenröhre umfaßt.

8. Vorrichtung zur Totalreflexions-Röntgenfluoreszenzanalyse nach einem der Ansprüche 1 bis 7, dadurch gekennzeichnet, daß zur Aufnahme einer Probe ein Probentisch gegenüber dem Meßaufnehmer angeordnet ist, wobei dieser vorzugsweise in z-Richtung und in x-Richtung längsverschieblich, um seine Mittelachse drehbar und in einer Kreissegmentführung schwenkbar ausgeführt ist.

9. Vorrichtung zur Totalreflexions-Röntgenfluoreszenzanalyse nach Anspruch 8, dadurch gekennzeichnet, daß der Probentisch mittels feinstauflösender Schrittmotoren verfahrbar ist.

10. Vorrichtung zur Totalreflexions-Röntgenfluoreszenzanalyse nach einem der Ansprüche 8 oder 9, dadurch gekennzeichnet, daß der Probentisch als Aufnahmeplatte eine Saugplatte aufweist, in welcher mehrere über ihre obere Ebene ausfahrbare Stifte integriert sind.

11. Vorrichtung zur Totalreflexions-Röntgenfluoreszenzanalyse nach einem der Ansprüche 1 bis 10, dadurch gekennzeichnet, daß der Meßaufnehmer in z-Richtung verfahrbar ist.

12. Vorrichtung zur Totalreflexions-Röntgenfluoreszenzanalyse nach einem der Ansprüche 1 bis 11, dadurch gekennzeichnet, daß dem Meßaufnehmer eine Streustrahlenblende vorgeschaltet ist.

13. Vorrichtung zur Totalreflexions-Röntgenfluoreszenzanalyse nach Anspruch 12, dadurch gekennzeichnet, daß die Streustrahlenblende in z-Richtung verfahrbar ist.

14. Vorrichtung zur Totalreflexions-Röntgenfluoreszenzanalyse nach einem der Ansprüche 1 bis 13, dadurch gekennzeichnet, daß die Anregung der Probe mittels eines einfallenden parallelen Röntgenstrahls erfolgt, welcher mit Hilfe von parabelförmig angeordneten Bragg-Reflektoren erzeugt wird, welche die von einer Röntgenröhre abgegebene Röntgenstrahlung reflektieren.

15. Vorrichtung zur Totalreflexions-Röntgenfluoreszenzanalyse nach einem der Ansprüche 1 bis 14, dadurch gekennzeichnet, daß der Meßaufnehmer eine Detektoranordnung aus mehreren DRIFT-Detektoren umfaßt, welche eine ortsaufgelöste Aufzeichnung der Röntgenfluoreszenzstrahlung der Probe ermöglicht.

16. Vorrichtung zur Totalreflexions-Röntgenfluoreszenzanalyse nach Anspruch 15, dadurch gekennzeichnet, daß die Detektoranordnung in einem ersten und in einem zweiten Modus betreibbar ist, wobei im ersten Modus die Röntgenfluoreszenzstrahlung der Probe ortsaufgelöst gemessen wird, und wobei im zweiten Modus das Summenspektrum der von den einzelnen Detektoren gelieferten Röntgenfluoreszenzspektren bestimmt wird.

17. Vorrichtung zur Totalreflexions-Röntgenfluoreszenzanalyse nach einem der Ansprüche 15 oder 16, dadurch gekennzeichnet, daß die Probe und der Meßaufnehmer relativ zueinander in x,y-Richtung bewegbar sind.

18. Vorrichtung zur Totalreflexions-Röntgenfluoreszenzanalyse nach einem der Ansprüche 15 bis 17, dadurch gekennzeichnet, daß die Detektoranordnung in Form von mindestens einem Kreissektor ausgebildet ist, wobei die Detektoranordung und die Probe bezüglich einer durch die Sektorspitze verlaufenden Achse relativ zueinander drehbar gelagert sind.

19. Vorrichtung zur Totalreflexions-Röntgenfluoreszenzanalyse nach einem der Ansprüche 15 oder 16, dadurch gekennzeichnet, daß die Detektoranordnung eine Fläche abdeckt, welche größer ist als die Fläche der Probe.

20. Verwendung einer Vorrichtung nach einem der Ansprüche 1 bis 19 zur Bestimmung von Fremdatomkonzentrationen auf Waferoberflächen.

21. Verfahren zur ortsaufgelösten Messung von Fremdatomkonzentrationen auf der Oberfläche eines Wafers mittels Totalreflexions-Röntgenfluoreszenzanalyse, wobei die Messung unter Verwendung einer mehrere Detektoren umfassenden Detektoranordnung durchgeführt wird und folgende Schritte umfaßt:
a) Erzeugen einer Relativbewegung zwischen der Detektoranordnung und der zu vermessenden Probe,
b) Aufnehmen der jeweiligen lokalen Röntgenfluoreszenzspektren,
c) Bestimmen der jeweiligen lokalen Fremdatomkonzentrationen aus den jeweiligen dort aufgezeichneten Röntgenfluoreszenzspektren.

22. Verfahren zur ortsaufgelösten Messung von Fremdatomkonzentrationen nach Anspruch 21, dadurch gekennzeichnet, daß die Detektoranordnung mehrere DRIFT-Detektoren umfaßt, wobei in jedem DRIFT-Detektor mittels einer Elektrodenanordnung von auf verschiedenen Spannungsniveaus befindlichen Elektroden ein elektrisches Feld erzeugbar ist, das eine Radialkomponente aufweist, wobei entstehende Ladungsträger durch die Radialkomponente des elektrischen Feldes auf eine niederkapazitive Sammelelektrode zu beschleunigbar sind.

23. Verfahren zur Messung der mittleren Fremdatomkonzentrationen auf der Oberfläche eines Wafers mittels Totalreflexions-Röntgenfluoreszenzanalyse, wobei die Messung unter Verwendung einer mehrere Detektoren umfassenden Detektoranordnung durchgeführt wird und folgende Schritte umfaßt:
a) Erzeugen einer Relativbewegung zwischen der Detektoranordnung und der zu vermessenden Probe,
b) Aufnehmen der jeweiligen lokalen Röntgenfluoreszenzspektren,
c) Summieren der lokalen Röntgenfluoreszenzspektren,
d) Bestimmen der mittleren Fremdatomkonzentrationen aus dem in Schritt c) erhaltenen Summenspektrum.

24. Verfahren zur Messung der mittleren Fremdatomkonzentrationen nach Anspruch 23, dadurch gekennzeichnet, daß die Detektoranordnung mehrere DRIFT-Detektoren umfaßt, wobei in jedem DRIFT-Detektor mittels einer Elektrodenanordnung von auf verschiedenen Spannungsniveaus befindlichen Elektroden ein elektrisches Feld erzeugbar ist, das eine Radialkomponente aufweist, wobei entstehende Ladungsträger durch die Radialkomponente des elektrischen Feldes auf eine niederkapazitive Sammelelektrode zu beschleunigbar sind.
